# DEMANDE DE BREVET EUROPEEN

(11) **EP 1 690 715 A1**
(43) Date de publication de la demande: **16.08.2006**
(21) Numéro de dépôt: 06290262.2
(22) Date de dépôt: 15.02.2006
(51) Int. Cl.: B60J 5/14

(54) **Véhicule convertible ayant une configuration pick-up**

(30) Priorité: 15.02.2005 FR 0501525; 01.06.2005 FR 0505570
(71) Demandeur: Heuliez, 79142 Cerizay Cedex (FR)
(72) Inventeur: Guillez, Jean-Marc, 79140 Cirieres (FR); Queveau, Paul, 79140 Montravers (FR); Queveau, Gérard, 79140 Le Pin (FR)
(74) Mandataire: Pichat, Thierry

(57) **Abrégé**

Il s'agit d'un véhicule convertible comprenant un capot (17) de coffre arrière (9) mobile par rapport à la caisse (7) du véhicule. Le capot comprend un capot principal (270) s'ouvrant de l'avant vers l'arrière autour d'une articulation principale (21) et se fermant à l'inverse, de sorte à permettre la rétractation ou le déploiement du toit (30) entre un espace de rangement situé sous le capot et une position au-dessus de l'habitacle, et un couvercle qui est disposé à l'endroit d'une ouverture supérieure du capot principal (270) et est articulé au capot principal vers l'avant de celui-ci par une articulation libérable, pour permettre d'une part le pivotement du couvercle de l'arrière vers l'avant pour accéder à une zone de rangement de bagages située sous le capot fermé et d'autre part, alors que ladite articulation est libérée, d'ouvrir de façon substantielle ladite ouverture supérieure du capot principal (270), le véhicule étant alors configuré en pick-up.

## Description

L'invention concerne un véhicule, en particulier un véhicule convertible dans plusieurs configurations.

Dans certains véhicules convertibles se posent des problèmes d'accessibilité au coffre, ou du moins à certaines zones de celui-ci et/ou de possibilité et de facilité de passer d'une configuration à une autre.

Ceci est en particulier le cas lorsque le coffre arrière sert également pour y loger un toit escamotable dont le véhicule est alors pourvu.

Plus généralement, il existe des problèmes de modularité de fonctionnement de certains couvercles et/ou de flexibilité d'utilisation de certaines zones d'un véhicule pouvant être surmontées par de tels capots ou couvercles, telles les coffres.

Ainsi, on connaît déjà un système d'articulation et/ou de guidage d'un couvercle de coffre adapté pour dégager ou recouvrir une ouverture d'accès à ce coffre, le couvercle étant pour cela monté articulé par rapport à une caisse de véhicule, par intermédiaire d'au moins une articulation.

La présente invention a pour objet d'apporter une solution permettant de faciliter l'accès à une zone du coffre, par exemple pour y ranger des bagages et/ou de faciliter le passage entre plusieurs configurations de véhicule.

Un objet de l'invention est de proposer une solution simple, mécaniquement fiable en ce qui concerne les moyens utilisés pour la mettre en oeuvre, d'un coût de revient maîtrisé et d'une utilisation pratique.

Pour apporter une solution aux inconvénients cités ci-dessus et faciliter l'utilisation du coffre arrière, il est en particulier conseillé que l'articulation soit libérable et puisse se trouver, d'une part, dans un premier état de verrouillage dans lequel l'articulation verrouillée permet le pivotement du couvercle entre une position ouverte dans laquelle l'ouverture d'accès au coffre est dégagée et une position fermée de recouvrement de l'ouverture du coffre, et, d'autre part, dans un second état de libération dans lequel cette articulation, alors libérée (non verrouillée) permet l'escamotage du couvercle pour ouvrir de façon substantielle ladite ouverture d'accès au coffre et configurer ce dernier en coffre appelée (aussi plate-forme) de pick-up.

De préférence, en particulier pour favoriser l'application à un véhicule convertible, on conseille, par ailleurs que le capot comprenne .
- un capot principal (ou partie principale de capot) qui s'ouvre de l'avant vers l'arrière autour d'une articulation principale et se ferme à l'inverse, de sorte à permettre la rétractation ou le déploiement du toit entre un espace de rangement situé sous le capot et une position au-dessus de l'habitacle,
- et un couvercle qui est disposé à l'endroit d'une ouverture supérieure du capot principal et est articulé au capot principal vers l'avant de celui-ci par une articulation libérable, de sorte à permettre d'une part le pivotement du couvercle de l'arrière vers l'avant pour accéder à une zone de rangement de bagages située sous le capot fermé et d'autre part, alors que ladite articulation est libérée, d'ouvrir de façon substantielle ladite ouverture supérieure du capot principal, le véhicule étant alors configuré en pick-up.

De préférence, des moyens sont prévus pour que le couvercle soit entièrement amovible par rapport au véhicule et/ou rangé à l'intérieur du coffre.

Pour limiter l'encombrement et faciliter l'utilisation par l'occupant, les moyens pour ranger le capot à l'intérieur du coffre comprendront avantageusement des glissières situées de part et d'autre du véhicule et s'étendant sensiblement entre ladite ouverture supérieure du capot principal et une paroi de fond du coffre, le couvercle étant disposé en position de rangement près d'une cloison avant du coffre.

Pour la simplicité, les moyens pour retirer le couvercle à l'écart du capot principal consisteront à ouvrir lesdites glissières vers haut.

Pour le pivotement d'ouverture du capot principal, appelé également ci-après « partie principale du capot », on privilégie que les glissières comprennent au moins deux tronçons complémentaires liés respectivement à l'avant du capot principal et à des parois dressées du coffre.

Pour favoriser l'accessibilité au coffre en particulier pour la manoeuvre des bagages, on conseille d'équiper le capot principal d'un portillon arrière de coffre fermant celui-ci, le portillon étant articulé (directement ou non) au capot principal par une articulation secondaire.

Pour combiner légèreté (visuelle, en poids), rigidité, ergonomie et compacité, le capot principal sera favorablement lié à une structure porteuse articulée à la caisse du véhicule par ladite articulation principale, l'articulation secondaire articulant le portillon à la structure porteuse.

Pour un accès maximum au coffre, le couvercle présentera un bord transversal arrière jouxtant un bord transversal supérieur du portillon, en position fermée du couvercle et du portillon.

Un véhicule équipé d'un couvercle perfectionné est également ici concerné, conformément à la revendication 12 jointe ; voir également les revendications subsidiaires 13 à 19 ici concernées.

Ci-après, on détaille des exemples préférés de réalisation, à partir de dessins où :
- la figure 1 est une vue en perspective selon l'invention, de trois quart arrière, d'une partie majeure d'un véhicule convertible découvrable,
- les figures 2 et 3 montrent de côté une partie majeure de la figure 1, en coupe suivant II-II pour la figure 2 et dans le sens de la flèche III pour la figure 3, avec deux toits différents et le capot arrière fermé et ouvert, comme le toit,
- les figures 4, 5, 6 montrent l'arrière du véhicule des figures précédentes, avec le capot fermé et le portillon successivement fermé, partiellement ouvert et entièrement ouvert, en vue de côté comme sur la figure 2,
- les figures 7 et 8 montrent, toujours de côté comme la figure 2, une zone arrière du véhicule, toit fermé au-dessus de l'habitacle et, par transparence, couvercle de capot fermé, ouvert -escamoté à l'avant du coffre- et en mouvement -pointillés, fig.8-, le portillon étant représenté fermé en trait plein et ouvert en trait gras interrompu, fig.7,
- la figure 9 montre en coupe longitudinale un système à glissières pour le couvercle (détail IX, figure 7) et la figure 10 est une coupe selon X-X,
- la figure 11 correspond au détail XI, figure 7, voir également coupe XI, figure 12, cette dernière correspondant à la coupe selon XII-XII, figure 11,
- la figure 13 montre en vue de côté l'escamotage du couvercle du capot dans le coffre, en liaison avec ses moyens de déplacement,
- la figure 14 est la coupe XIV-XIV figure 13,
- les figures 15, 16 et 17 montrent à nouveau le mouvement du couvercle de capot,
- les figures 18 et 19, ainsi que 20 et 21 montrent des variantes respectivement des figures 11, 12, et 1, 2, et
- les figures 22, 23 et 24 schématisent trois autres réalisations du capot de coffre arrière.

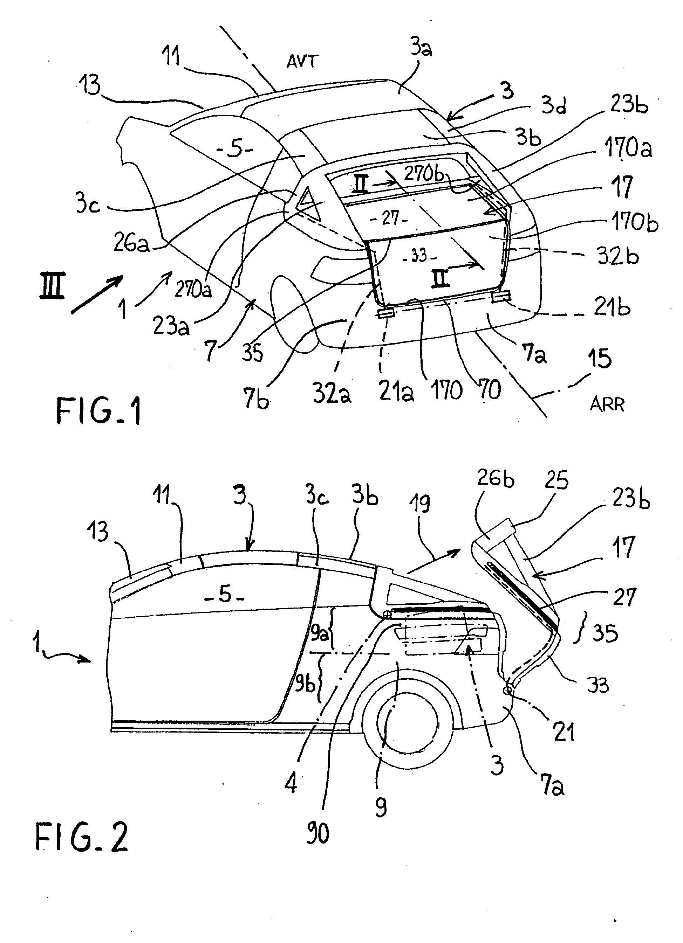

Les dessins de style et donc la ligne des véhicules sont considérées comme originales, en particulier le dessin du capot 17. Sur la figure 1, le véhicule illustré est un convertible trois volumes. Ce pourrait être un convertible deux volumes. L'avant est marqué AVT, l'arrière ARR.

Le véhicule 1 illustré sur les figures 1 et 2 avec le toit 3 fermé au-dessus de l'habitacle 5 est transformable en un véhicule découvrable. Le toit 3 est pour cela mobile par rapport à la structure fixe, également appelée caisse, 7 du véhicule, pour pouvoir être placé à l'écart du dessus de l'habitacle 5.

Figure 2, le toit 3 est montré rangé dans le coffre arrière 9 (traits mixtes), derrière l'habitacle 5.

Le véhicule 1 est donc transformable en cabriolet. Il est également transformable en pick-up.

Le toit 3 comprend au moins un élément rigide de toit, mobile par rapport à la structure 7, de préférence par des moyens d'articulation non représentés. Figure 2, le repère 4, comme ailleurs toutes les croix cerclées, schématise un axe de pivotement, ici de bras latéraux pour l'articulation du toit par rapport à la caisse.

On appelle ici structure fixe ou caisse 7 du véhicule, l'assemblage qui définit l'ossature du véhicule et vis-à-vis duquel certains éléments s'articulent (toit, capot de coffre arrière...). Le châssis et des éléments de carrosserie font partie de la structure 7.

Le toit 3, comprend ici un élément rigide avant de toit 3a, un élément rigide de toit central arrière 3b et deux éléments rigides latéraux de toit 3c, 3d.

Dans l'état fermé du toit au-dessus de l'habitacle comme sur les figures 1 et 2 (trait plein), l'élément de toit avant 3a s'étend entre la traverse 11 du pare-brise 13 et l'élément de toit central arrière 3b, lequel est bordé latéralement, de part et d'autre de l'axe longitudinal de symétrie 15 du véhicule, par les éléments latéraux de toit 3c, 3d.

Toit 3 rangé, celui-ci est disposé dans une zone 9a limitée du coffre 9. Ainsi, une autre zone libre de rangement 9b existe encore dans le coffre, à l'écart de la zone 9a. On préfère que le toit soit rangé essentiellement à l'horizontale, avec les panneaux de plus grande surface correspondant aux éléments 3a et 3b disposés sensiblement horizontalement ; La zone 9a est alors en haut du (volume du) coffre (fig.2). Les zones 9a,9b communiquent; le volume du coffre est unique.

Rangé, le toit 3 est replié, les éléments de toit 3a, 3b, 3c, 3d étant articulés entre eux pour permettre ce repliage, selon un mode et des moyens d'articulation connus (voir FR-A-2 814 402).

Le coffre arrière 9 est fermé globalement par un capot 17 mobile par rapport à la structure 7.

Pour le rangement du toit 3 à l'écart du dessus de l'habitacle, le capot 17 s'ouvre par basculement de l'avant vers l'arrière (flèche 19), par l'intermédiaire de moyens d'articulation 21, transversaux à l'axe 15 et situés vers l'arrière et avantageusement près d'une extrémité basse du capot, en assurant une liaison avec la structure 7.

Les moyens d'articulation 21 comprennent ici deux pivots 21a, 21b (figure 1) assurant un pivotement autour d'un axe horizontal situé le long du bord transversal arrière 170 du capot 17 et le long d'un bord transversal supérieur 70 d'un bandeau structurel 7a appartenant à la structure 7 et définissant ici une partie centrale du bouclier arrière 7b du véhicule.

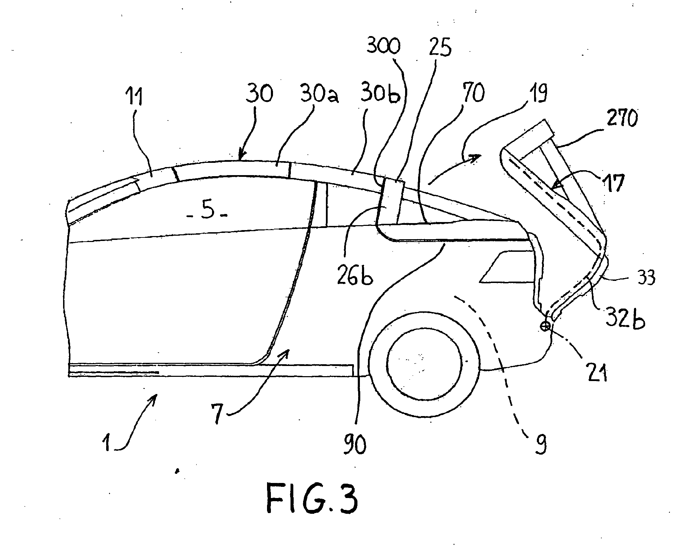

Le capot 17 peut-être structurellement résistant ou être renforcé par une armature ou structure porteuse 32 (pointillés sur la figure 1), comprenant au moins deux bras latéraux 32a, 32b éventuellement réunis par une (ou plusieurs) traverse(s) et par l'intermédiaire desquelles s'effectue l'articulation du capot sur la structure 7, comme le montre la liaison avec l'articulation 21 sur la figure 3.

Sur cette figure, le toit mobile, repéré ici 30, ne comprend plus qu'un panneau rigide avant de toit 30a et un panneau arrière rigide de toit 30b disposé derrière le panneau 30a, dans cette position fermée au-dessus de l'habitacle.

Comme repéré fig. 1, suivant l'axe longitudinal 15, le capot 17 comprend une partie avant 170a et une partie arrière 170b qui est plus inclinée par rapport à l'horizontale que la partie avant, d'où la rupture de pente 35 que l'on constate sur certaines figures.

Latéralement, de part et d'autre de l'axe 15, la partie avant 170a peut comprendre deux branches latérales 23a, 23b inclinées, appartenant à une structure de raccordement et/ou de renfort 23 qui la surmonte et qui raccorde visuellement le dessus du capot 17 et l'arrière 300 du toit, lorsqu'il est fermé au-dessus de l'habitacle.

Les branches latérales 23a, 23b définissent une courbe prolongeant longitudinalement celle du toit et même du pare-brise (voir figures 2 et 3).

A l'arrière, les branches latérales 23a, 23b se raccordent longitudinalement au niveau de l'arrière des bords latéraux de la partie avant 170a du capot.

A l'avant, ces branches inclinées sont réunies par une traverse 25 s'étendant à l'avant et en travers de la partie avant 170a de capot, sensiblement au niveau du bord transversal arrière 300 du toit fermé. Des montants dressés 26a, 26b prolongent la traverse vers le bas, jusqu'au capot. Ceci renforce le capot.

Entre les branches 23a, 23b, une surface sensiblement horizontale du capot, ou moins inclinée par rapport à l'horizontale que la partie arrière et en particulier qu'une partie au moins d'un portillon mobile 33, s'étend au-dessus du coffre 9 et de la zone de rangement du toit, capot fermé.

Ainsi, ici, sur l'essentiel de la partie avant de capot 170a, ce capot comprend un couvercle mobile 27 qui permet, ou ferme, un accès au coffre par le dessus.

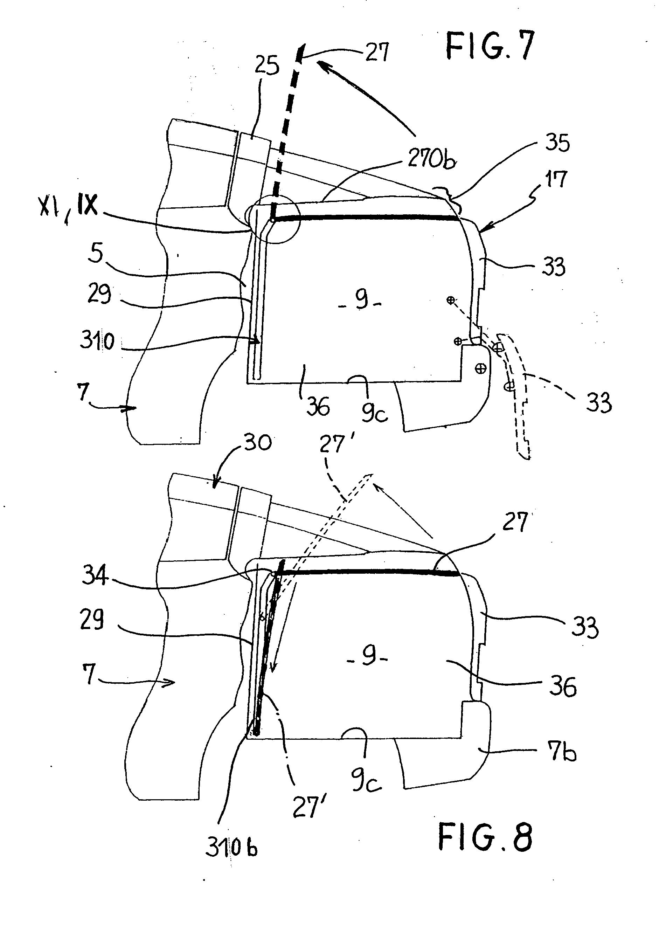

Ce couvercle peut être agencé pour une transformation en pick-up du véhicule, une fois placé à l'écart du dessus du coffre dont l'ouverture supérieure est alors dégagée si le toit est fermé (figure 8).

Ainsi, le capot 17 comprend donc en quelque sorte une partie principale (appelé également capot principal) 270 complété(e) par le couvercle 27, voire le portillon 33. Cette partie comprend au moins les deux bandes latérales 270a, 270b (figure 1) au-dessus desquelles s'étendent les branches 23a, 23b et entre lesquelles est situé au moins en partie le couvercle 27. A l'arrière se dresse le portillon 33 et le capot principal 270 n'est ici articulé par rapport à la caisse 7 qu'à l'arrière, autour de l'articulation transversale unique 21.

Le portillon 33 est mobile par rapport à cette partie principale de capot, en particulier ici par articulation vis-à-vis de la structure porteuse 32 à laquelle la partie principale de capot est fixée pour son renfort et son articulation. L'articulation du portillon 33 est illustrée aux figures 1 à 4.

Le couvercle 27 peut être amovible par rapport au reste du capot.

Figures 7 et 8, il s'escamote à l'intérieur du coffre 9, vers la limite transversale avant de celui-ci, le long et derrière la cloison 29 de séparation entre l'habitacle 5 et le coffre 9. Ici, la cloison 29 est fixe. Elle est fixée à la caisse.

Escamoté, le couvercle apparaît sensiblement vertical à l'avant du coffre. Des glissières 310 latérales sensiblement verticales sont fixées au moins en partie à l'avant de parois intérieures 36 dressées du coffre le délimitant localement. Ouvrir les glissières vers le haut par une patte mobile, en 34, permet le retrait du couvercle.

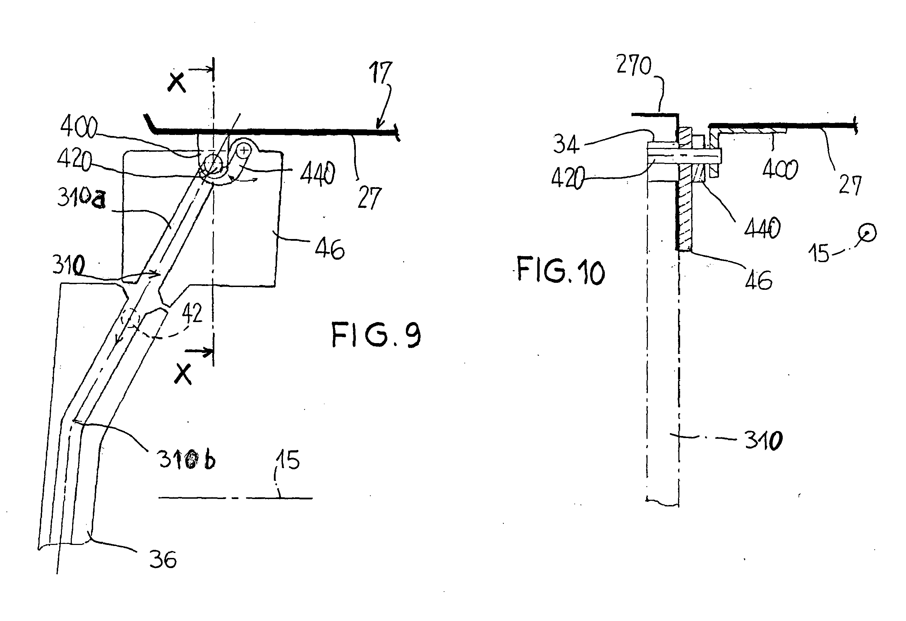

Figures 9 à 13, on voit une réalisation d'articulation libérable et de guidage en coulissement pour le couvercle.

L'articulation libérable comprend, de part et d'autre de l'axe 15, une patte 400 fixée sous l'avant du couvercle 27 et qui porte des tourillons 420 s'étendant transversalement, ici perpendiculairement, à l'axe 15.

Chaque tourillon est engagé dans une des glissières 310. Chaque glissière 310 comprend deux tronçons placés dans une continuité.

Dans les figures 9 et 10, en tant que moyen de verrouillage débrayable, un crochet 440 mobile en rotation sur une plaque 46 pivote avec un moyen de verrouillage débrayable pour soit bloquer le tourillon correspondant en haut de la glissière (figure 7), soit le libérer et autoriser son coulissement pour pivoter le couvercle vers l'avant et le haut, et le ranger dans le coffre (figure 8).

Dans ces deux figures, le tronçon haut 310a est porté par la plaque 46 latérale fixée au capot principal 270, en particulier l'une de ses bandes latérales. Le tronçon contiguë inférieur 310b s'étend jusqu'au fond 9c du coffre (figure 8) et est fixé à la paroi 36. Le moyen de verrouillage 440 est lié au plateau 46. Lorsque le capot 17 s'ouvre (flèches, figure 2 ou 3), chaque plateau 46 et tronçon de glissière 31a se déplacent avec lui.

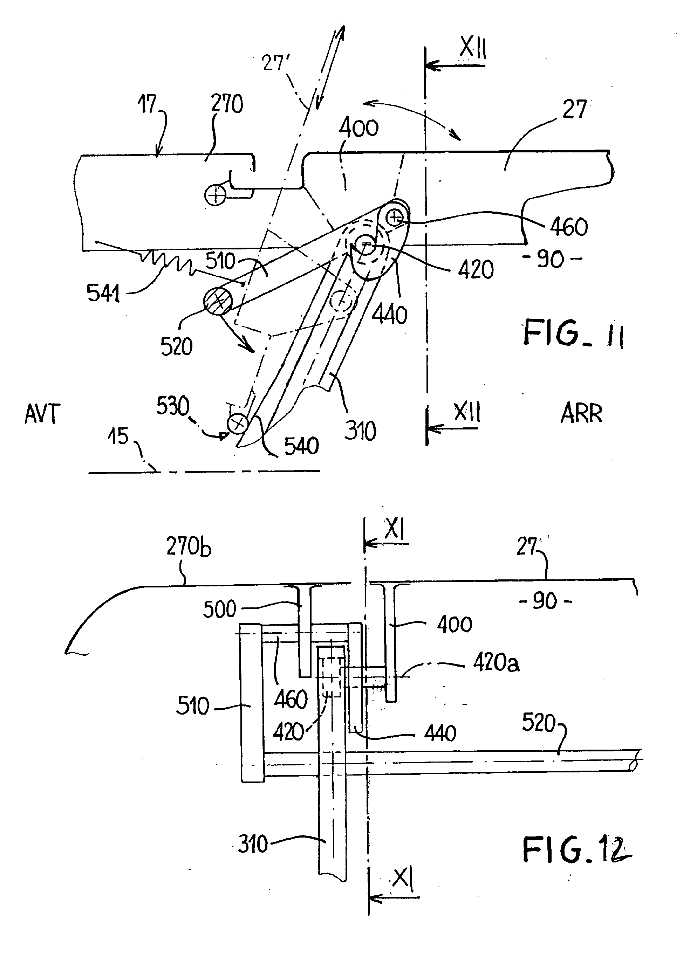

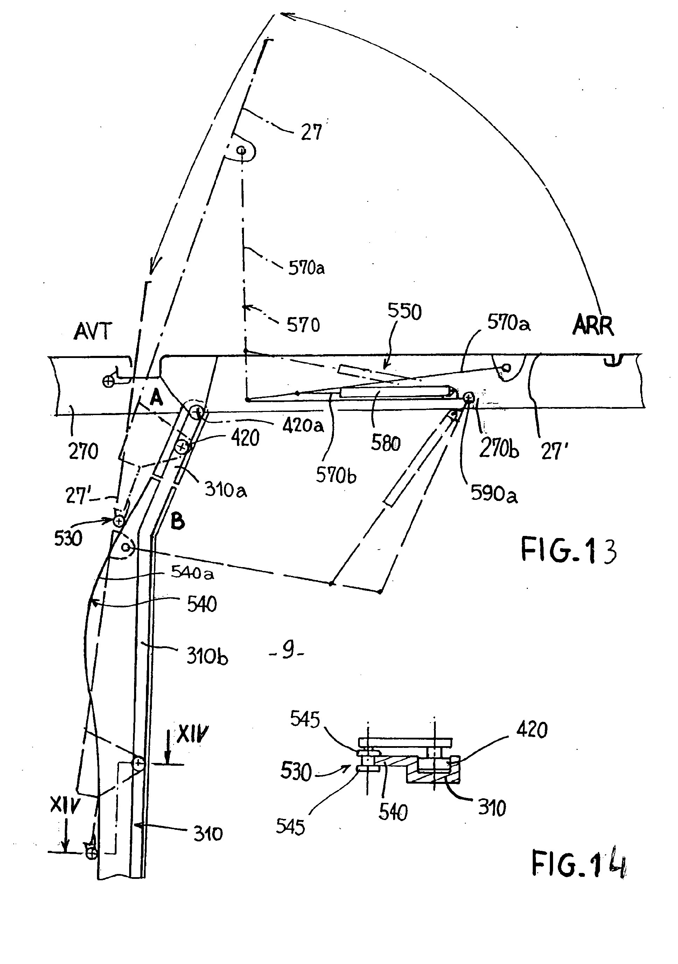

Dans les figures 11 à 13, en tant que moyen de verrouillage débrayable, un crochet 440 mobile en rotation sur un axe transversal 460 pivote pour, soit bloquer le tourillon correspondant en haut de la glissière (figure 11), soit le libérer et autoriser son coulissement. Le couvercle peut alors pivoter vers l'avant et le haut, et être rangé dans le coffre (figs 13, 16 et 17). Chaque axe 460 tourne dans un palier fixé sous l'une des bandes latérales du capot principal 270, par des pattes. Figure 10, la patte correspondante 500 est fixée sous la bande latérale 270b.

Dans ces trois figures, le tronçon haut 310a est porté par une plaque fixée au capot principal 270, en particulier l'une de ses bandes latérales.

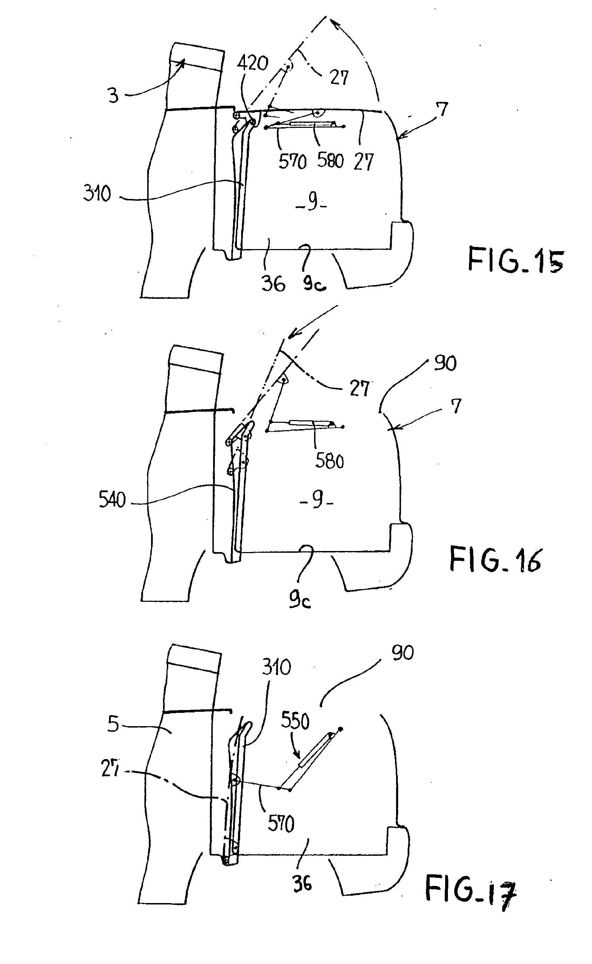

Le tronçon contiguë inférieur 310b s'étend jusqu'au fond 9c du coffre (figures 15 à 17) et est fixé à la paroi 36 du coffre.

Lorsque le capot 17 s'ouvre en pivotant autour de 21, en entraînant le couvercle 27, chaque tronçon de glissières 310a bascule avec lui.

Parallèlement à leur axe de rotation 420a, les tourillons coaxiaux 420, également appelés premier et second axes de pivot, sont reliés chacun à un système à leviers 510 agissant sur l'un des crochets 440. Ces crochets définissent donc des moyens de verrous libérables, verrouillant ou libérant l'articulation du couvercle.

Favorablement, on trouvera de tels systèmes à levier 510 agissant chacun sur l'un des deux verrous libérables 440 disposés de part et d'autre du couvercle. Ces deux systèmes à levier sont ici reliés entre eux par un élément de liaison permettant l'actionnement commun des deux systèmes à levier et des deux verrous libérables.

Figures 11 et 12, cet élément de liaison comprend une barre 520 s'étendant transversalement à l'axe longitudinal 15, à l'intérieur du coffre, vers l'avant du couvercle 27 et sous celui-ci, dans l'état fermé de ce couvercle.

La barre 520, horizontale, est fixée à ses extrémités à la base de chaque levier 510, lequel est fixé à son autre extrémité à l'axe de pivot 460 porteur du verrou libérable 440 correspondant.

Faire pivoter la barre 520 autour des axes de pivots 460, ici en la tirant vers l'arrière (ARR) provoque une rotation vers l'arrière des verrous 440, ici des crochets ouverts vers l'avant, et déverrouille les tourillons 420 qui peuvent alors coulisser vers le bas dans les glissières 310. Un ressort 541, ou tout moyen de rappel, rappelle les verrous 440 vers l'avant, et la surface inférieure des crochets pivotants illustrés assure leur pivotement vers l'arrière à l'encontre de ce ressort lorsqu'en montant les tourillons agissent sur eux.

Pour sécuriser son coulissement, le couvercle 27 comprend des éléments de guidage 530 qui engagent au moins une surface de came 540, lorsque le couvercle coulisse ainsi le long des glissières en suivant alors un angle d'inclinaison qui peut varier, comme on le voit figs. 14 à 17.

L'engagement entre la/chaque surface de came 540 et l'élément de guidage correspondant 530 est sollicité par un dispositif d'actionnement 550-570 qui agit positivement sur le couvercle 27 pour créer l'inclinaison favorable.

Ainsi figure 13, mais également figures 15 à 17, des moyens 550 de poussée agissent sur le couvercle 27 pour assister son articulation par rapport à la caisse, en maintenant l'engagement entre les éléments de guidage 530 du couvercle et la/chaque surface de came 540, lors du coulissement du couvercle le long des glissières. Ils agissent d'ailleurs également, dans l'état verrouillé de l'articulation libérable, pour faire pivoter le couvercle 27 par rapport à la partie principale 270 du capot.

Les moyens de poussée comprennent ici un compas 570 articulé au couvercle et sur lequel agit un actionneur 580. Ici l'actionneur est un vérin à gaz sous pression, c'est-à-dire à double effet.

Favorablement, le compas 570 comprend, près de l'un au moins des côtés du couvercle, deux biellettes 570a, 570b articulées l'une par rapport à l'autre ainsi que, respectivement, sur le couvercle et sur un pivot 590a liée à l'une ou l'autre des branches latérales, telle qu'ici 270b, du capot principal 270 (voir figure 13). L'actionneur 580 est articulé entre les deux biellettes.

Figure 13, et comme on le conseille, la, ou chaque, surface de came 540 est située tout le long de l'avant de la/d'une des glissières 310. Son profil est courbe, notablement renflé vers l'avant, en 540a, pour diminuer localement l'inclinaison du couvercle par rapport à la verticale dans le sens de la descente, entre la position haute A et une position intermédiaire B située peu après que les tourillons 420 se soient engagés dans la partie 310b des glissières. En dessous l'inclinaison devient, quasi, verticale. Ainsi, on favorise le passage de la zone arrière du toit.

Comme illustré figures 13 et 15 à 17, l'ouverture du capot 27, tourillons 420 verrouillés en haut des glissières, est provoquée par le déplacement vers le haut à environ 90° de la/chaque biellette avant 570a. L'actionneur 580 pivote légèrement vers le haut (voir figure 15).

Il pivote légèrement vers le bas, en même temps que le compas toujours ouvert à environ 90°, en début de descente du couvercle si l'on a déverrouillé les tourillons (figure 16).

En position basse, verticale du couvercle entièrement rangé dans la zone avant du coffre, le compas occupe alors un angle obtus et l'actionneur est nettement basculé vers le bas (figure 17).

Pour favoriser, pendant toute cette descente, le contact entre les éléments 530 de guidage du couvercle et la/les surface(s) de came 540, ceux-ci présentent des flancs latéraux 545 de guidage latéral du couvercle lors de son coulissement le long des glissières. Les flancs 545 sont ici sur les éléments de guidage (voir figure 14).

Par ailleurs, ces éléments de guidage 530 du couvercle sont disposés en saillie le long, ou à proximité, d'un bord avant 570 du couvercle proche de l'habitacle (voir figure 13).

Comme montré aux figures 13 et 14, les éléments de guidage 530 peuvent consister en des galets ou des roulettes se déplaçant chacun sur sa surface de came, sous la commande d'angle du conducteur qui pousse sur l'arrière du couvercle, pour le faire glisser vers le bas le long des glissières. Le couvercle est alors soumis à la poussée de l'actionneur qui à la fois le pousse et le retient pour qu'il ne descende pas trop vite et demeure au contact de la surface de came.

Pour l'équilibre des manoeuvres et notamment des montées et descentes du couvercle, on conseille deux actionneurs, deux compas et deux verrous 440, de part et d'autre de l'axe 15, avec la barre de liaison 520.

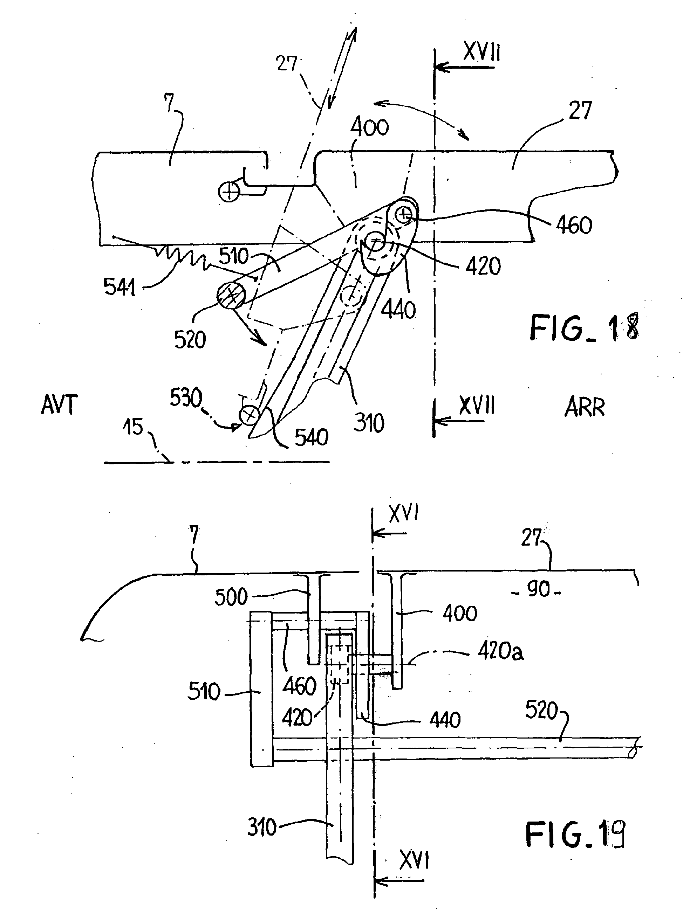

Les figures 18 et 19 correspondent aux figures 11 et 12, respectivement, à ceci près que le capot 27, qui peut être identique au précédent avec les mêmes éléments de manoeuvre et de guidage (d'ailleurs repères à l'identique), est maintenant articulé -directement- vis-à-vis de la caisse 7, par rapport à laquelle les verrous 440 sont donc montés mobiles. Les pattes, telles que 500 pour la liaison droite, sont ainsi portées par la caisse.

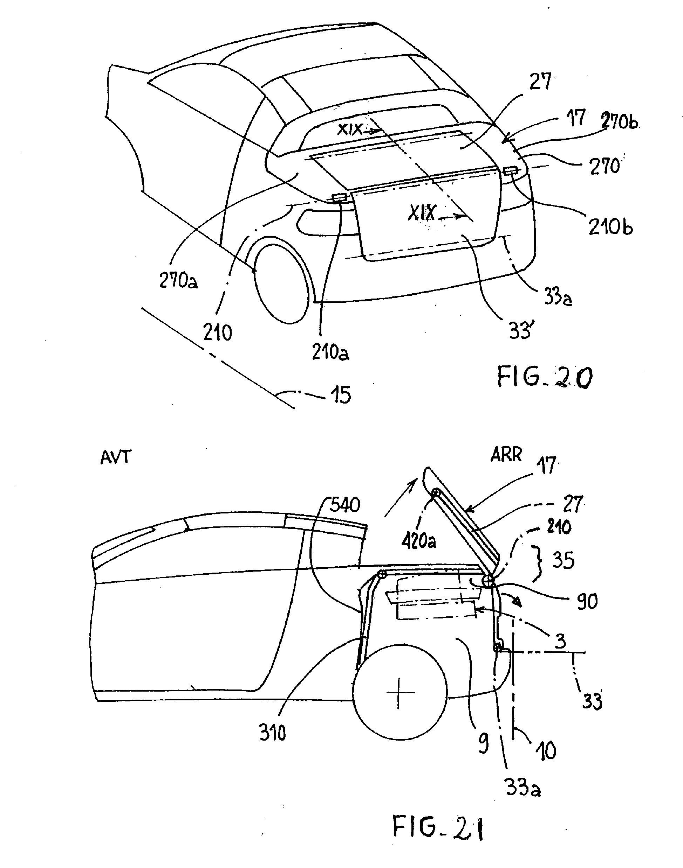

Figures 20 et 21, le capot principal 270 s'articule plus haut sur la caisse, via les pivots 210a,210b, autour de l'axe horizontal 210 situé sensiblement au niveau du sommet et à l'arrière du coffre 9, donc à l'arrière de son ouverture supérieure 90, près de la rupture de pente 35.

Les pivots 210a,210b sont liés à l'extrémité arrière des bandes latérales 270a, 270b du capot principal 270, ici dépourvu des branches latérales 23a, 23b inclinées de la figure 1.

En s'ouvrant par pivotement autour de l'axe horizontal 210 (figure 21), le capot ne déborde donc plus au-delà de l'encombrement hors tout du véhicule et demeure donc dans la limite du plan arrière 10 du véhicule, à la différence de la solution de la figure 2.

Si le capot des figures 20 et 21 comprend en outre un portillon 33, celui-ci peut être identique au portillon illustré aux figures 7 et 8 ou être monté pivotant autour d'un axe horizontal inférieur 33a, pour s'ouvrir comme une plate-forme, voir figure 21, traits mixtes.

A l'arrière, le capot 17 comprend donc un portillon mobile 33 qui peut occuper toute la surface de la partie arrière 170b, ou une partie seulement, voire déborder sur la surface centrale supérieure avant 170a (un léger débordement du couvercle en-dessous et au-delà du coude 35 étant également possible).

Ainsi, l'articulation du couvercle 27 au capot principal peut être soit dans un état de blocage dans laquelle elle permet le pivotement du couvercle 27 de l'arrière vers l'avant, soit dans un état de libération dans laquelle elle permet l'escamotage du couvercle (le couvercle étant soit retiré soit rangé dans le coffre) pour ouvrir de façon substantielle l'ouverture supérieure du capot principal et configurer le véhicule en pick-up.

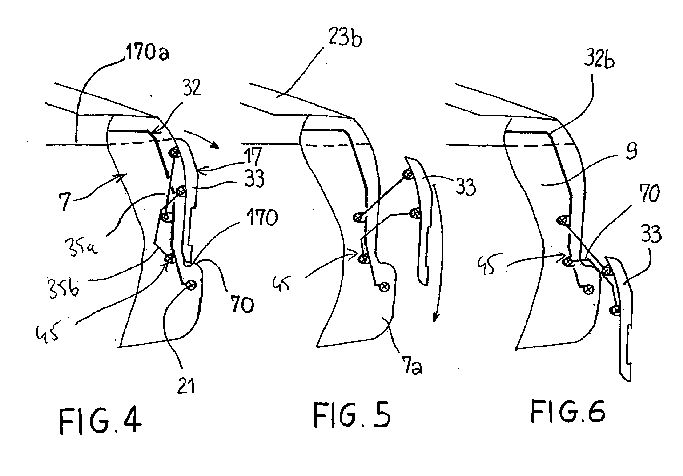

Les ouvrants, portillon et couvercle délimitant, fermés, les ouvertures, ou surfaces d'ouverture, respectivement supérieure et arrière du capot (figure 4) peuvent se jouxter en particulier près de la rupture de pente 35 qui donne donc cet aspect coudé au capot, près du bord arrière la du véhicule.

Transversalement à l'axe 15, la largeur, ici de préférence commune, du couvercle et du portillon est telle que les bras structuraux 32a, 32b s'étendent de part et d'autre d'eux, ou à proximité immédiate de leurs bords latéraux, pour ne pas gêner l'accès au coffre.

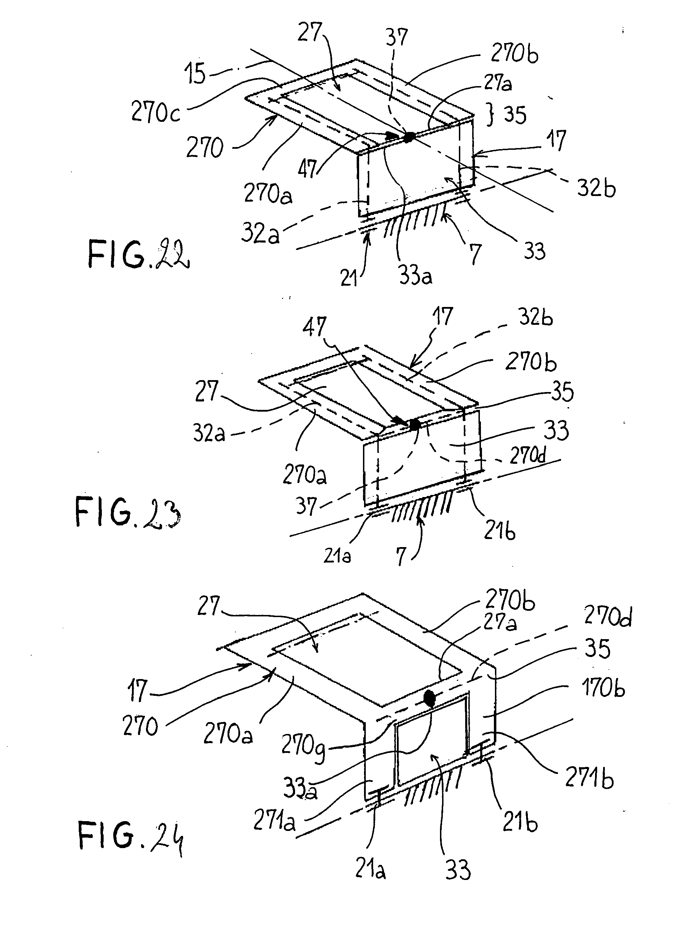

Figure 22, les bras 32a, 32b, coudés en 35, s'étendent latéralement sous le portillon 33 fermé et sous la partie principale 270 du capot qui prend ici une forme sensiblement en « U » avec une bande transversale avant 270c qui relie les bandes latérales. Un système de verrouillage 37 commun, débrayable, tel qu'un crochet situé entre les bords transversaux respectivement arrière 27a et supérieure 33a adjacents, ou proches l'un de l'autre, du couvercle et du portillon assure leur verrouillage ou leur libération.

Figure 23, le verrouillage 37 est monté sur une traverse 270d reliant les bras 32a, 32b à l'endroit de la rupture de pente 35.

Plutôt qu'un verrou commun 37, ou en plus d'un tel verrou, le couvercle 27 et le portillon 33 peuvent avoir une commande de verrouillage commune. Le dispositif de verrouillage 47, commun, peut alors comprendre des tiges commandant le coulissement ou la rotation de pions s'engageant de manière libérable, latéralement, dans des orifices du capot principal, en particulier ici formés dans les bandes 270a,270b, à proximité du coude 35.

Figure 24, le portillon et le couvercle sont un peu plus éloignés l'un de l'autre. Ils sont séparés par un bandeau 270g de la partie principale de capot renforcé par la traverse 270d, à l'endroit du coude 35. Ici, le capot principal 270 est lui-même structurellement résistant. Il n'y a donc pas de structure porteuse. En bas à l'arrière, on peut trouver une autre traverse pour les pivots 21a, 21b. Sinon les pivots peuvent être portés par le bord arrière bas 271a, 271b des bandes latérales 270a, 270b.

La partie dite principale du capot peut même avoir différentes formes (π, figures 1, 22 et 23, H coudé en 35, figure 24).

Elle peut être soit légère en dimensions et résistance, avec alors une tôle d'habillage soutenue par une structure porteuse notamment pour l'articulation arrière, ici la seule, soit être structurée, par nervurage....

Le portillon 33 pourrait être articulé directement à la partie principale du capot. Dans la solution illustrée, il est articulé à la structure porteuse 32.

Il pourrait basculer à l'horizontale pour s'ouvrir, autour de pivots situés le long de son bord horizontal inférieur, tel que 170 (figure 21). Sur les figures 4 à 6, on a préféré qu'il soit mobile sur et avec le capot 17, en étant ouvert dans une position verticale permettant un accès facile au coffre 9, de face, par l'arrière et en configuration pick-up.

Toit rangé comme sur la figure 2, il permet d'accéder à la zone 9b située sous lui, le portillon 33 s'étendant alors au moins en partie, en position fermée, en face de cette zone 9b.

Plus généralement, le portillon 33 est situé à proximité immédiate du bord arrière du véhicule et s'étend, en position fermée, en face de la partie arrière du coffre, ici sensiblement jusqu'au sommet de ce coffre, libérant ainsi le maximum d'accès par l'arrière, en-dessous de la partie avant 170a de capot, ou du couvercle 27 s'il existe.

Figures 4, 5 et 6, les arrachements rappellent l'articulation horizontale, basse et arrière du capot 17 autour de l'axe de rotation 21, les moyens de pivotement étant ici portés pour partie par le bord inférieur arrière de la structure porteuse 32 et pour partie par la caisse 7, à proximité du bord 70. Il est également montré un système d'articulation, dit articulation secondaire, 45 pour ouvrir et fermer sensiblement verticalement le portillon 33 dont l'ouverture commence par un mouvement sensiblement vers l'arrière suivi d'un mouvement sensiblement vers le bas.

L'articulation s'opère par un système de biellettes 35a, 35b ici lié à la structure porteuse 30 et définissant un quadrilatère déformable.

Le portillon se déplace au moins essentiellement jusqu'en dessous du rebord 70 (figure 6). C'est pourquoi les axes 21 et ceux des biellettes sur le capot sont proches.

Concernant le portillon, il a été cherché :
- une structure simple permettant de dégager une ouverture importante du coffre tout en balayant avantageusement un espace très réduit lors de son mouvement d'ouverture/fermeture,
- une solution simple adaptée à un véhicule à toit rétractable : dans ce cas le portillon est avantageusement articulé au capot principal de coffre qui s'ouvre ici uniquement de l'avant vers l'arrière pour escamoter le toit. Le portillon et son articulation peuvent être de structure légère et facile à manipuler à la main (un vérin d'équilibrage peut cependant être prévu). Avec la structure et le mouvement obtenus par le dispositif à quadrilatère déformable et l'articulation réalisée entre le capot principal et le portillon, celui-ci peut facilement être motorisé à l'aide d'un actionneur tel qu'un vérin hydraulique placé entre la caisse et l'une des biellettes d'articulation.

Concernant le couvercle de coffre, on a cherché :
- une structure simple et légère, permettant à la fois l'ouverture et la fermeture de la zone de coffre ainsi que le rangement du couvercle dans le coffre ou son enlèvement du véhicule,
- une solution simple adaptée un véhicule à toit rétractable : dans ce cas le couvercle est articulé au capot principal de coffre qui s'ouvre de l'avant vers l'arrière pour escamoter le toit. Un capot présentant deux axes de pivot servant à la fois à son pivotement d'ouverture/fermeture et à son guidage sur des glissières permet d'obtenir un couvercle facile à manipuler à la main (éventuellement via un vérin d'équilibrage). Donc pas de nécessaire système d'actionnement motorisé coûteux. Avec des pivots libérables vers le haut des glissières pour retirer le capot, on peut assurer facilement une transformation en pick-up avec un large accès au coffre devenu benne de chargement.

Pour apporter une solution au but visé, en facilitant l'utilisation du coffre arrière et les manoeuvres du ou des éléments de capotage qui le recouvrent dans un état fermé, il est en particulier conseillé que le système d'articulation et/ou de guidage d'un couvercle de coffre adapté pour servir donc de capotage à ce coffre et pour en dégager ou en recouvrir l'ouverture d'accès, soit tel que ce couvercle soit monté articulé par rapport à une caisse de véhicule, par l'intermédiaire d'au moins une articulation libérable comprenant des axes de pivots portés par le couvercle et permettant :
- dans un premier état verrouillé de cet articulation, de bloquer dans une position déterminée les axes de pivots par rapport à la caisse et d'autoriser alors l'articulation par rapport à cette caisse, par pivotement du couvercle entre une position ouverte dans laquelle l'ouverture d'accès au coffre est dégagée et une position fermée de recouvrement de l'ouverture du coffre,
- dans un second état libéré de cette articulation, de faire coulisser le couvercle le long des glissières, en dégageant ladite ouverture et l'accès au coffre.

Dans une version, on prévoit que l'articulation libérable comprenne des axes de pivot fixés au couvercle et des moyens de verrous libérales portés par la caisse du véhicule.

Ceci permet une articulation directe à la caisse, que ce soit, lorsque l'articulation libérable est dans son état verrouillé, pour une articulation de l'arrière vers l'avant du véhicule, ou de l'avant vers l'arrière, ou pour un escamotage du couvercle le long du bord transversal arrière ou le long du bord transversal avant du coffre, dans l'état déverrouillé de l'articulation.

Un problème corollaire, concerne la manière d'agir sur les verrous pour les placer dans leur position de libération ou de verrouillage. On cherche une solution fiable, performante et utilisable en série sur une chaîne de fabrication de véhicules automobiles. On propose pour cela que l'articulation libérable, ou chaque articulation, comprenne des premier et second axes de pivots et des moyens de verrous libérables pour placer ces premier et second axes de pivot dans l'état verrouillé ou dans l'état libéré, lesdits premier et second axes de pivots étant disposés coaxialement, à distance l'un de l'autre suivant cet axe et étant reliés à au moins un système à levier(s) agissant sur les moyens de verrous libérales pour verrouiller ou libérer l'articulation.

On cherche par ailleurs à favoriser l'actionnement des verrous, y compris par le conducteur, ceci de façon simple et aisément accessible.

On propose pour cela que le système précité comprenne au moins deux systèmes à levier(s) agissant sur deux dits moyens de verrous libérables disposés à distance l'un de l'autre, les deux systèmes à levier étant reliés entre eux par un élément de liaison permettant l'actionnement commun des systèmes à levier et des deux moyens de verrous libérables.

De préférence, on prévoit en outre que, monté sur un véhicule présentant un axe longitudinal, un avant et un arrière suivant cet axe, l'élément de liaison comprenne une barre s'étendant transversalement audit axe longitudinal, à l'intérieur du coffre, vers l'avant du couvercle et sous celui-ci, dans l'état fermé de ce couvercle.

La barre, ou tout autre élément de liaison choisi, pourra porter une tige ou une dragonne, et cette barre agira alors favorablement sur les verrous pour les libérer, par traction sur cet élément de liaison, en direction de l'arrière du coffre et donc du véhicule, un organe de rappel rappelant les verrous dans leur position verrouillée, hors sollicitation de l'élément de liaison.

Lors du coulissement du couvercle le long des glissières, il se peut qu'il y ait un risque de butée contre un élément de la caisse et/ou du toit du véhicule, si ce toit est en position déployée au-dessus de l'habitacle.

Pour éviter cela, on conseille que le couvercle coulisse le long des glissières, de sorte à contrôler l'angle d'inclinaison de ce couvercle au cours de son coulissement.

Pour favoriser la fiabilité de cette solution et permettre une fabrication aisée et peu coûteuse, on conseille en outre :
- que les éléments du guidage du couvercle soient disposés en saillie le long, ou à proximité, d'un bord avant de ce couvercle proche de l'habitacle dont le véhicule est pourvu,
- et/ou que la, ou chaque, surface de came soit située le long de la/ d'une des glissière(s).

A nouveau pour la fiabilité vis-à-vis du coulissement du couvercle, on conseille par ailleurs que les éléments du guidage du couvercle et/ou la/les surface(s) de came présentent des flancs latéraux de guidage latéral du couvercle lors de son coulissement le long des glissières.

La question de la manoeuvre du couvercle dans ses différents mouvements a également été prise en compte, afin d'éviter que celui-ci se place mal, soit difficile à bouger, voire se coince.

Il est ainsi proposé d'adjoindre des moyens de poussée agissant sur le couvercle pour assister l'articulation de celui-ci par rapport à la caisse, dans l'état verrouillé de l'articulation libérable, et maintenir l'engagement entre les éléments de guidage du couvercle et la/chaque surface de came, lors du coulissement du couvercle le long des glissières.

De façon complémentaire, on conseille :
- que les moyens de poussée comprennent un compas articulé au couvercle et sur lequel agit un actionneur,
- et/ou que l'actionneur comprenne un élément de rappel, tel qu'un ressort ou un vérin à gaz ou pression,
- et/ou que le compas comprenne des biellettes articulées l'une par rapport à l'autre, l'actionneur étant articulé entre les biellettes.

Outre le système d'articulation et/ou de guidage qui vient d'être présenté, l'invention concerne également un véhicule automobile, de préférence convertible, qui comprend un tel système.

Cette utilisation du système sur tel véhicule à toit rétractable dans le coffre arrière du véhicule est prévue en particulier dans le cas où l'ouverture du coffre que dégage ou recouvre le couvercle est située en partie supérieure du coffre (proche de l'horizontale) et où le couvercle est, dans l'état verrouillé de l'articulation libérable, articulé par rapport à un capot principal s'ouvrant de l'avant vers l'arrière autour d'une articulation principale liée à la caisse, et se fermant à l'inverse, de sorte à permettre le mouvement du toit entre le coffre et une position de recouvrement au-dessus de l'habitacle.

Le couvercle sera favorablement articulé au capot principal vers l'avant de celui-ci, par ladite articulation libérable, ceci dans l'état verrouillé de cette articulation, pour s'ouvrir alors de l'arrière vers l'avant, et se fermer à l'inverse.

Concernant la combinaison couvercle et portillon, outre ce qui précède, on a cherché à conjuguer optimisation structurelle du capot, simplicité, coût et fonctionnalités (passage du toit rétractable, accès à la zone de rangement du coffre, transformation rapide en pick-up...). Ainsi a-t'on disposé de façon mobile, sur un même capot principal, un couvercle supérieur et un portillon arrière. Le capot principal peut n'avoir qu'une articulation motorisée située vers l'arrière, alors qu'on trouve classiquement des articulations avant et arrière pour réaliser un basculement de capot de l'avant vers l'arrière et inversement. L'accès au coffre se fait par le portillon ou le couvercle. La transformation en pick-up est simple et rapide, avec un chargement par l'arrière, en ouvrant le portillon. Le capot dans son ensemble peut être réalisé sous forme de module pré-assemblé intégrant les fonctions de différents constituants (actionnement et verrouillage du capot principal sur la caisse, mobilité (articulations) du portillon et du couvercle sur le couvercle principal, verrouillage du portillon et du couvercle sur le couvercle principal).

## Revendications

1. Système d'articulation et/ou de guidage d'un couvercle (27) de coffre (9) adapté pour dégager ou recouvrir une ouverture d'accès à ce coffre, le couvercle étant pour cela monté articulé par rapport à une caisse (7) de véhicule, par intermédiaire d'au moins une articulation (420, 440), **caractérisé en ce que** l'articulation (420, 440) est libérable et se trouve, d'une part, dans un premier état de verrouillage dans lequel elle permet le pivotement du couvercle (27) entre une position ouverte dans laquelle l'ouverture d'accès au coffre est dégagée et une position fermée de recouvrement de l'ouverture du coffre, et, d'autre part, dans un second état de libération dans lequel elle permet l'escamotage du couvercle (27) pour ouvrir de façon substantielle ladite ouverture d'accès au coffre et configurer ce dernier en coffre de pick-up.

2. Système selon la revendication 1, **caractérisé en ce qu'**il comprend des moyens (34, 310) pour que le couvercle (27) soit entièrement amovible par rapport au véhicule et/ou rangé à l'intérieur du coffre (9).

3. Système selon la revendication 1 ou 2,
**caractérisé en ce que** l'articulation libérable (420, 440) comprend des axes de pivot (420) qui sont portés par le couvercle, qui sont bloqués dans une position déterminée par rapport à la caisse (7) pour autoriser le pivotement du couvercle (27) quand l'articulation est dans son état de verrouillage, et qui sont adaptés à entraîner le coulissement du couvercle (27) le long de glissières (310) quand l'articulation est dans son état de libération.

4. Système selon la revendication 3, **caractérisé en ce que** l'articulation libérable comprend des premier et second axes de pivot (420) et des moyens de verrous libérables (440, 460) pour placer ces premier et second axes de pivot dans l'état verrouillé ou dans l'état libéré, lesdits premier et second axes de pivots étant disposés coaxialement, à distance l'un de l'autre suivant cet axe et étant reliés à au moins un système à levier (510, 520) agissant sur les moyens de verrous libérables pour verrouiller ou libérer l'articulation.

5. Système selon la revendication 4, **caractérisé en ce qu'**il comprend au moins deux dits systèmes à levier (510) agissant sur deux dits moyens de verrous libérables (440) disposés à distance l'un de l'autre, les deux systèmes à levier étant reliés entre eux par un élément de liaison (520) permettant leur actionnement commun.

6. Système selon l'une quelconque des revendications 3 à 5, **caractérisé en ce que** le couvercle (27, 27) comprend des éléments de guidage (530) qui engagent au moins une surface de came (540), lorsque le couvercle coulisse le long des glissières (310), de sorte à contrôler l'angle d'inclinaison de ce couvercle au cours de son coulissement.

7. Système selon la revendication 6, **caractérisé en ce que** les éléments (530) du guidage du couvercle et/ou le/les surface(s) de came (540) présentent des flancs latéraux (545) de guidage latéral du couvercle lors de son coulissement le long des glissières (310).

8. Système selon l'une quelconque des revendications 6 ou 7, **caractérisé en ce qu'**il comprend des moyens de poussée (550, 570, 580) agissant sur le couvercle (27) pour assister l'articulation de celui-ci par rapport à la caisse, dans l'état verrouillé de l'articulation libérable, et maintenir l'engagement entre les éléments (530) de guidage du couvercle et la/chaque surface de came (540), lors du coulissement du couvercle le long des glissières (310).

9. Système selon la revendication 8, **caractérisé en ce que** les moyens de poussée comprennent un compas (570) articulé au couvercle et sur lequel agit un actionneur (580).

10. Système selon la revendication 9, **caractérisé en ce que** l'actionneur (580) comprend un élément de rappel tel qu'un ressort ou un vérin à gaz ou pression.

11. Système selon l'une quelconque des revendications 9 ou 10, **caractérisé en ce que** le compas comprend au moins deux biellettes (570a, 570b) articulées l'une par rapport à l'autre et l'actionneur (580) est articulé entre les deux biellettes.

12. Véhicule convertible présentant un axe longitudinal (15) et un avant et un arrière suivant cet axe et comprenant une caisse (7), un toit (3,30) rétractable mobile par rapport à la caisse, un habitacle (5), un coffre arrière (9) situé derrière l'habitacle et un couvercle (27) pour ce coffre, **caractérisé en ce qu'**il comprend en outre un système d'articulation et/ou de guidage du couvercle pour ce coffre, selon l'une quelconque des revendications précédentes.

13. Véhicule selon la revendication 12 muni d'un système conforme à l'une des revendications 7 à 11, **caractérisé en ce que** les éléments (530) de guidage du couvercle sont disposés en saillie le long, ou à proximité, d'un bord avant du couvercle (27, 27) proche de l'habitacle (5), et/ou chaque surface de came (540) est située le long d'une glissière (310).

14. Véhicule selon la revendication 12 ou 13 muni d'un système conforme à la revendication 5 ou à l'une des revendications qui en dépend, **caractérisé en ce que**, l'élément de liaison comprend une barre (520) s'étendant transversalement a l'axe longitudinal du véhicule, à l'intérieur du coffre (9), vers l'avant du couvercle (27, 27) et sous celui-ci, dans l'état fermé de ce couvercle.

15. Véhicule selon l'une des revendications 12 à 14 muni d'un système conforme à l'une des revendications 3 à 11, **caractérisé en ce que** l'articulation libérable comprend des moyens de verrous libérables (440) portés par la caisse (7) du véhicule et les axes de pivot (420) sont fixés au couvercle (27).

16. Véhicule selon l'une des revendications 13 ou 14, **caractérisé en ce qu'**il comprend un capot (17) pour ce coffre arrière, le capot comprenant un capot principal (270) s'ouvrant de l'avant vers l'arrière autour d'une articulation principale (21) liée à la caisse et se fermant à l'inverse, de sorte à permettre la rétractation ou le déploiement du toit entre un espace de rangement (9a) situé sous le capot et une position au-dessus de l'habitacle, le couvercle (27) qui est disposé à l'endroit d'une ouverture supérieure du capot principal (270), étant articulé au capot principal vers l'avant de celui-ci par l'articulation libérable (420, 440).

17. Véhicule selon la revendication 16 muni d'un système conforme à l'une des revendications 3 à 11, **caractérisé en que** les glissières comprennent au moins deux tronçons complémentaires (310a, 310b) liés respectivement à l'avant du capot principal (270) et à des parois dressées (36) du coffre.

18. Véhicule selon l'une des revendications 16 ou 17 muni d'un système conforme aux revendications 2 et 3 ou à l'une quelconque des revendications qui en dépendent, **caractérisé en que** les moyens (34) pour retirer le couvercle à l'écart du capot principal consistent à ouvrir lesdites glissières (310) vers haut.

19. Véhicule selon l'une des revendications 16 ou 17, **caractérisé en ce que** les moyens pour ranger le capot (27) à l'intérieur du coffre (9) comprennent des glissières (310, 310a, 310b) situées de part et d'autre du véhicule et s'étendant sensiblement entre ladite ouverture supérieure du capot principal et une paroi (9c) de fond du coffre, le couvercle étant disposé en position de rangement près d'une cloison (29) avant du coffre.
